# EUROPEAN PATENT APPLICATION

(11) **EP 2 838 019 A1**
(43) Date of publication of application: **18.02.2015**
(21) Application number: 14180118.3
(22) Date of filing: 07.08.2014
(51) Int. Cl.: G06F 9/48

(54) **Multiple threads execution processor and operating method thereof**

(30) Priority: 13.08.2013 KR 20130096104
(71) Applicant: Samsung Electronics Co., Ltd, Gyeonggi-do 443-742 (KR)
(72) Inventor: Jang, Choon-Ki, Gyeonggi-do (KR); Ahn, Min-Wook, Seoul (KR); Yoo, Dong-Hoon, Gyeonggi-do (KR)
(74) Representative: Grünecker, Kinkeldey, Stockmair & Schwanhäusser

(57) **Abstract**

There is provided a multiple threads execution processor. The multiple threads execution processor includes a thread selector configured to select a first thread from among a plurality of threads for executing a program code, and a thread executor configured to execute the first thread selected by the thread selector, and execute a second thread selected by the thread selector from among the plurality of threads after completing execution of the first thread.

## Description

### 1. Field

Apparatuses and methods consistent with exemplary embodiments relate to a multiple threads execution processor and an operating method thereof.

### 2. Description of the Related Art

Graphics may be processed in basic units of a vertex and a pixel, and processing of these units may be performed independently of each other. Therefore, processing of each of these units in a graphic processing unit (GPU) may be considered a thread that may be executed independently. There has been research and developments on parallel processing algorithms for executing these multiple threads at the same time in one processor core of a GPU.

Further, general purpose computing on graphic processing unit (GPGPU) has been suggested to allow a GPU architecture to be used for general purpose computation. In the GPGPU, parallel processing algorithms applied to the GPU may be used to process computation of applications, which was traditionally performed by a central processing unit (CPU). An example of the GPGPU is a compute unified device architecture (CUDA), which enables parallel processing algorithms used in GPU to be written by using an industry standard language, such as a C programming language.

A single instruction multiple threads (SIMT) architecture has been suggested as an example of the parallel processing algorithm for effectively executing multiple threads. In the SIMT architecture, an identical instruction of a plurality of threads is processed at the same time in a plurality of processing units (PU) integrated in one processor core. Further, each processing unit may sequentially process an identical instruction of two or more threads. Therefore, system performance may be enhanced by making the most of multiple threads that may be simultaneously executed. A thread switch overhead, which occurs in an individual processing unit (PU), may be resolved by using a register in a processing unit, and by replicating resources used for thread execution, thereby enabling various thread states.

One or more branch divergences and convergences may be included in a program code, which is processed by multiple threads according to a parallel processing algorithm. In this case, paths for processing corresponding program codes may be varied in proportion to the number of divergences and convergences. Even when processing is performed according to the parallel processing algorithm, all threads do not necessarily follow an identical path, but each of a plurality of threads may follow their own intrinsic paths. In a case where a plurality of threads follows an identical path to process a program code in the SIMT architecture, all processing units may simultaneously process an identical instruction of all threads that may be executed at the same time, thereby enabling a simple control flow, and effective use of resources of processing units, but overhead may be caused by frequent thread switching. By contrast, in a case where a plurality of threads follows different paths to process a program code in the SIMT architecture, each of the threads following different paths has a significantly diverse and complicated control flow, and all the threads may not be executed at the same time after executing a branch instruction, such that efficiency of resource use of processing units may be reduced.

### SUMMARY

According to an aspect of an exemplary embodiment, there is provided a multiple threads execution processor including a thread selector configured to select a first thread from among a plurality of threads for executing a program code, and a thread executor configured to execute the first thread selected by the thread selector, and execute a second thread selected by the thread selector from among the plurality of threads after completing execution of the first thread.

The multiple threads execution processor may further include a thread storage configured to store the plurality of threads.

Each thread of the plurality of threads stored in the thread storage may be in one of an initial state and a terminated state, and wherein the thread selector may be further configured to select one thread in the initial state from among the plurality of threads.

The thread storage may be further configured to select threads in the initial state from among the plurality of threads by a round-robin method.

The thread selector may be further configured to select threads in the initial state from among the plurality of threads by using thread state information indicating a state of each of the plurality of threads stored in the thread storage.

Each thread of the plurality of threads may be configured to follow any one execution path from among a plurality of execution paths for executing the program code.

The plurality of execution paths may be determined by program counters corresponding to each of the plurality of execution paths.

According to an aspect of another exemplary embodiment, there is provided a multiple threads execution processor including a thread selector configured to select a first thread from among a plurality of threads for executing a program code, a thread executor configured to execute the first thread selected by the thread selector, and a thread switch determiner configured to determine whether an instruction issued for executing the first thread is a passed instruction, wherein the thread executor is further configured to, in response to a determination made by the thread switch determiner that an instruction issued while executing the first thread is a passed instruction, perform thread switching to a second thread selected by the thread selector from among the plurality of threads stored in the thread storage, to execute the second thread.

The multiple threads execution processor may further include a thread storage configured to store the plurality of threads.

The thread switch determiner may be further configured to determine whether the issued instruction is a passed instruction based on thread switch information explicitly marked in the program code.

The thread switch information may be included while encoding the program code.

The thread switch information may be included by a programmer while encoding the program code, or automatically included while encoding according to a specific algorithm.

Each thread of the plurality of threads stored in the thread storage may be in one of a ready state, a passed state, and a terminated state, and wherein the thread selector may be further configured to select one thread in the ready state from among the plurality of threads.

The first thread may become a passed state thread in response to the thread executor performing thread switching from the first thread to the second thread, and wherein the first thread may be restored to a ready state thread in response to the thread executor completing processing of a passed instruction issued before the thread switching.

The thread selector may be further configured to select ready state threads from among the plurality of threads by using thread state information indicating the state of each of the plurality of threads stored in the thread storage.

According to an aspect of another exemplary embodiment, there is provided a multiple threads execution processor including a processing unit configured to execute a plurality of threads configured to execute a program code, wherein the processing unit sequentially executes the plurality of threads by executing one thread among the plurality of threads and then perform thread switching to execute another thread next in the plurality of threads.

The multiple threads execution processor may further include a plurality of processing units, wherein the plurality of processing units are configured to execute the plurality of threads by dividing the plurality of threads among the plurality of processing units.

Each of the plurality of processing units may be further configured to use an intrinsic program counter.

According to an aspect of another exemplary embodiment, there is provided a multiple threads execution processor including a processing unit configured to execute a plurality of threads configured to execute a program code, wherein the processing unit sequentially executes the plurality of threads by thread switching, in response to an instruction issued while executing a first thread among the plurality of threads being a passed instruction, to execute a second thread.

The processing unit may be further configured to determine whether the issued instruction is a passed instruction based on thread switch information explicitly marked in the program code.

The thread switch information may be included by a programmer while encoding the program code, and automatically included according to a specific algorithm.

Each thread of the plurality of threads may be in one of a ready state, a passed state, and a terminated state, and wherein the processing unit may be further configured to select one thread in the ready state from among the plurality of threads to execute the selected thread.

The first thread may become a passed state thread in response to thread switching, and wherein the first thread may be restored to a ready state thread in response to completing processing of the passed instruction.

The multiple threads execution processor may further include a plurality of processing units, wherein each of the plurality of processing units may be configured to use a program counter that specifies any one execution path among a plurality of execution paths for executing the program code.

According to an aspect of another exemplary embodiment, there is provided a method of operating a multiple threads execution processor to execute a plurality of threads for executing a program code, the method including executing a first thread among the plurality of threads, and performing thread switching to execute another thread among the plurality of threads, wherein the plurality of threads are sequentially executed until execution of the plurality of threads is complete.

According to an aspect of another exemplary embodiment, there is provided a method of operating a multiple threads execution processor to execute a plurality of threads for executing a program code, the method including determining, using the multiple threads execution processor, whether an instruction issued for execution is a passed instruction when executing a first thread from among the plurality of threads, and executing, using the multiple threads execution processor, the first thread in response to a determination that the issued instruction is not a passed instruction, and performing thread switching to execute a second thread from among the plurality of threads in response to a determination that the issued instruction is a passed instruction.

The plurality of threads may be sequentially executed through thread switching until execution of the plurality of threads is complete.

Thread switch information for determining whether the issued instruction may be a passed instruction is explicitly marked in the program code.

According to an aspect of another embodiment, there is provided a method of operation a multiple threads processor, the method including executing, using a thread executor, instructions of a thread sequentially in response to the thread being in a ready state, halting, using a thread selector, execution of the instructions of the thread when the thread is in a passed state and waiting until the thread state changes back to the ready state before continuing execution, and completing execution of the thread by completing the execution of all instructions in the thread using the thread executor and placing the thread into a terminated state using the thread selector.

The method further includes executing, using the thread executor, second instructions of a second thread sequentially when the second thread is in a ready state and in response to the thread being in the passed state and halted.

The method further includes the halting execution is done in response to the thread being put into the passed state when a current instruction to be executed exceeds a processing time threshold.

According to an aspect of another embodiment, there is provided a multiple threads processor that includes a thread executor configured to execute instructions of a thread sequentially in response to the thread being in a ready state; and a thread selector configured to halt execution of the instructions of the thread when the thread is in a passed state and waiting until the thread state changes back to the ready state before continuing execution, wherein the thread executor and thread selector are further configured to complete execution of the thread by completing the execution of all instructions in the thread using the thread executor and placing the thread into a terminated state using the thread selector.

The tread selector of the multiple threads processor is further configured to selected as second thread in response to the thread being in a passed state, and wherein the thread executor is further configured to execute second instructions of the second thread.

The execution is halted in response to the thread being put into the passed state when a current instruction to be executed exceeds a processing time threshold.

### BRIEF DESCRIPTION OF THE DRAWINGS

The above and/or other aspects will become apparent and more readily appreciated from the following description of exemplary embodiments, taken in conjunction with the accompanying drawings in which:
FIG. 1 is a block diagram illustrating a configuration of a multiple threads execution processor according to an exemplary embodiment;
FIG. 2 is a block diagram illustrating a configuration of a multiple threads execution processor according to another exemplary embodiment;
FIG. 3 is a diagram schematically illustrating an example of states that a thread may have, and state transitions, in a multiple threads execution processor;
FIG. 4 is a flowchart illustrating an operating method of a multiple threads execution processor according to an exemplary embodiment;
FIG. 5 is a flowchart illustrating an operating method of a multiple threads execution processor according to another exemplary embodiment;
FIG. 6 is a flowchart illustrating an operating method of a multiple threads execution processor according to another exemplary embodiment;
FIG. 7 is a flowchart illustrating an operating method of a multiple threads execution processor according to another exemplary embodiment;
FIG. 8A is a view illustrating an example program code in a case where a passed instruction is not explicitly marked;
FIG. 8B is a view illustrating another example of an example program code in a case where a passed instruction is explicitly marked;
FIG. 8C is a view illustrating a control flow graph of the example program code illustrated in FIGS. 8A and 8B;
FIG. 9A is a view illustrating executing multiple threads, which follow an identical execution path, in one processing unit using the example program code in FIG. 8A;
FIGS. 9B and 9C are views illustrating an example of executing multiple threads, which follow different execution paths, in one processing unit using the example program code in FIG. 8A.
FIG. 9D is a view illustrating executing multiple threads, which follow an identical execution path, in one processing unit using the example program code in FIG. 8a according to an exemplary embodiment;
FIG. 9E is a view illustrating executing multiple threads, which follow different execution paths, in one processing unit using the example program code in FIG. 8A according to an exemplary embodiment;
FIG. 10A is a view illustrating executing multiple threads, which follow an identical execution path, in two processing units using the example program code in FIG. 8A;
FIGS. 10B and 10C are views illustrating executing multiple threads, which follow different execution paths, in two processing units using the example program code in FIG. 8A;
FIG. 10D is a view illustrating executing multiple threads, which follow an identical execution path, in two processing units using the example program code in FIG. 8A according to an exemplary embodiment;
FIG. 10E is a view illustrating executing multiple threads, which follow different execution paths, in two processing units using the example program code in FIG. 8a according to an exemplary embodiment;
FIG. 11A is a view illustrating executing multiple threads, which follow different execution paths, in one processing unit using the example program code in FIG. 8A according to another exemplary embodiment; and
FIG. 11B is a view illustrating executing multiple threads, which follow different execution paths, in two processing units using the example program code in FIG. 8A according to another exemplary embodiment.

### DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing steps and/or operations described is an example; however, the sequence of and/or operations is not limited to that set forth herein and may be changed as is known in the art, with the exception of steps and/or operations necessarily occurring in a particular order. In addition, respective descriptions of well-known functions and constructions may be omitted for increased clarity and conciseness.

Additionally, exemplary embodiments will now be described more fully hereinafter with reference to the accompanying drawings. The exemplary embodiments may, however, be embodied in many different forms and should not be construed as being limited to the embodiments set forth herein. These embodiments are provided so that this disclosure will be thorough and complete and will fully convey the exemplary embodiments to those of ordinary skill in the art. The scope is defined not by the detailed description but by the appended claims. Like numerals denote like elements throughout.

Throughout the drawings and the detailed description, unless otherwise described, the same drawing reference numerals will be understood to refer to the same elements, features, and structures. The relative size and depiction of these elements may be exaggerated for clarity, illustration, and convenience.

Hereinafter, a multiple threads execution processor and an operating method thereof will be described in detail with reference to the accompanying drawings. The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

The term "...unit" used in the embodiments indicates a component including software or hardware, such as a Field Programmable Gate Array (FPGA) or an Application-Specific Integrated Circuit (ASIC), and the "...unit" performs certain roles. However, the "...unit" is not limited to software or hardware. The "...unit" may be configured to be included in an addressable storage medium or to reproduce one or more processors. Therefore, for example, the "...unit" includes components, such as software components, object-oriented software components, class components, and task components, processes, functions, attributes, procedures, subroutines, segments of program code, drivers, firmware, microcode, circuits, data, a database, data structures, tables, arrays, and variables. A function provided inside components and "...units" may be combined into a smaller number of components and "...units", or further divided into additional components and "...units".

Although the terms used herein are generic terms which are currently widely used and are selected by taking into consideration functions thereof, the meanings of the terms may vary according to the intentions of persons skilled in the art, legal precedents, or the emergence of new technologies. Furthermore, some specific terms may be randomly selected by the applicant, in which case the meanings of the terms may be specifically defined in the description of the exemplary embodiment. Thus, the terms should be defined not by simple appellations thereof but based on the meanings thereof and the context of the description of the exemplary embodiment. As used herein, expressions such as "at least one of," when preceding a list of elements, modify the entire list of elements and do not modify the individual elements of the list.

It will be understood that when the terms "includes," "comprises," "including," and/or "comprising," when used in this specification, specify the presence of stated elements and/or components, but do not preclude the presence or addition of one or more elements and/or components thereof. As used herein, the term "module" refers to a unit that can perform at least one function or operation and may be implemented utilizing any form of hardware, software, or a combination thereof.

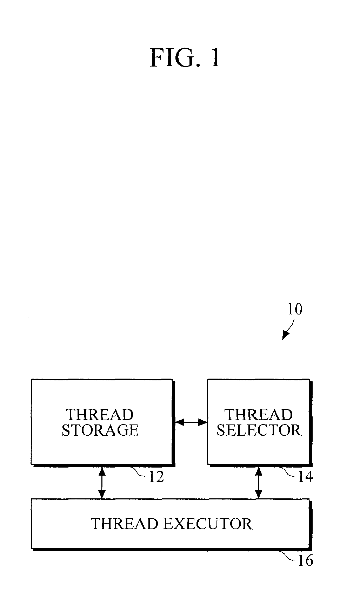

FIG. 1 is a block diagram illustrating a configuration of a multiple threads execution processor according to an exemplary embodiment. Referring to FIG. 1, the multiple threads execution processor 10 includes a thread storage 12, a thread selector 14, and a thread executor 16. The configuration of the processor 10 illustrated in FIG. 1 is logically classified according to its function, and each constituent element may be separately implemented in a physical manner, or two or more constituent elements may be integrated to be implemented as one element.

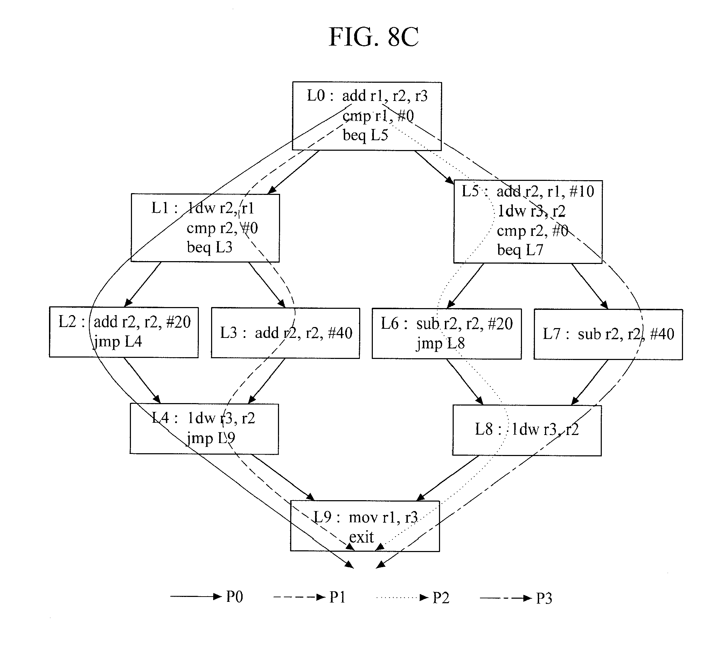

The multiple threads execution processor 10 relates to a processor that executes a plurality of threads for executing an identical program code. A plurality of threads for processing an identical program code is called "multiple threads." In other words, multiple threads may be considered a pool of threads that process an identical program code. In a case where a program code includes one or more branch divergences and convergences, multiple threads are processed according to an identical execution path or different execution paths (see FIG. 8C). Further, a plurality of different execution paths may be determined by a program counter (PC) corresponding to each execution path.

The multiple threads execution processor 10 may be a central processing unit (CPU) processor, a GPU processor, a GPGPU processor, and the like, but there is no specific limit to its type. The multiple threads execution processor 10 may include one or more processor cores, and each processor core may include one or more processing units (PUs). Multiple threads may be processed all in one PU, or may be simultaneously processed by being distributed in a plurality of PUs.

Further, the multiple threads execution processor 10 may be used in a specific computing system, for example, a personal computer, an entertainment system, a media system, a game system, a communication device, a personal digital assistant (PDA), or a specific system that uses one or more processors. A computing system generally includes an input and output module and the like, in addition to a processor, and these constituent elements may be connected through a bus.

The multiple threads execution processor 10 may include one or more processor cores. Further, one processor core may be comprised of one or a plurality of processing units (PUs). A plurality of processing units (PUs) all may use an identical program counter (PC), or each PU may use their own intrinsic program counter (PC). When all processing units use an identical program counter, a plurality of processing units (PUs) execute threads of an identical execution path, whereas when each processing unit uses an intrinsic program counter (PC), a plurality of processing units (PU) each execute threads of an execution path corresponding to each program counter (PC), and the execution path may be different. Further, one processing unit executes a plurality of threads in such a manner that after completing one thread, another thread is executed.

The thread storage 12 is configured to store a plurality of threads executed in the multiple threads execution processor 10. A plurality of threads stored in the thread storage 12 may be threads that are to be executed later in the thread executor 16, and/or threads that have already been executed in the thread executor 16. According to another exemplary embodiment, the threads that are to be executed and those that are already executed may be stored elsewhere. For example the threads may be stored in at least one of a local cache memory, a local memory unit, or in an external storage location such as a hard drive or elsewhere across a network connection. Threads that are to be executed later in the thread executor 16 may be called "initial state" threads, and threads that have already been executed in the thread executor 16 may be called "terminated state" threads. According to an exemplary embodiment, "the initial state" threads include threads in a state where not even one instruction is processed.

A plurality of threads stored in the thread storage 12 may include one or more multiple threads. As mentioned above, multiple threads are a pool of threads that execute an identical program code. This means that multiple threads are configured to process a plurality of data with an identical characteristic, such as a plurality of vertexes or pixels that constitute a graphic, but are not limited thereto. Further, execution paths (a series of instructions) of each multiple thread may all be the same, or may be different from each other. Each of the plurality of threads that constitute the multiple threads may be executed independently of each other, or may be executed at the same time.

According to an exemplary embodiment, selection and/or determination of a thread and a thread group to be executed may be determined by an algorithm. In accordance with another exemplary embodiment, there may exist a case where a plurality of algorithms may execute the same operations but are independent from one another but are still able to become a thread. For example, the processing of each of pixel in an image may use an image processing algorithm that is independent to each pixel. Another example includes the processing of vertexes and pixel shading in a three dimensional (3D) graphic processing embodiment.

The thread selector 14 is configured to select any one thread to be executed in the thread executor 16 from among a plurality of threads stored in the thread storage 12. In this case, the thread selector 14 may select "initial state" threads as threads to be executed in the thread executor 16. "Terminated state" threads, of which execution has already been completed in the thread executor 16, are not selected by the thread selector 14. When there is a plurality of "initial state" threads, the thread selector 14 sequentially selects a plurality of threads, in which there is no particular limit to an algorithm for selecting threads to be executed in the thread executor 16. For example, the thread selector 14 may sequentially select threads to be executed in the thread executor 16 from among a plurality of threads, by a round-robin method. According to an exemplary embodiment, the thread selector 14 may select threads to be executed in the thread executor 16 by using information, which indicates each state of a plurality of threads stored in the thread storage 12, that is, thread state information. The thread state information may be stored by being recorded in a specific storage unit of the thread selector 14, or in a separate storage unit.

The thread state information may be generated and managed by the thread selector 14, and there is no particular limit to its format. To this end, the thread selector 14 may consistently monitor a state of threads stored in the thread storage 12. Depending on an exemplary embodiment, the thread selector 14 may receive information on threads, of which execution has been completed, from the thread executor 16, and the information may be reflected in the thread state information.

The thread executor 16 is configured to execute threads selected by the thread selector 14. More specifically, the thread executor 16 executes "initial state" threads selected by the thread selector 14, and performs processing from an initial instruction to the last instruction of the threads. In other words, the thread executor 16 executes threads without thread switching in the middle, until the execution thereof is completed. As a result, execution of "initial state" threads is completed by the thread executor 16 in a sequence in which the threads are selected by the thread selector 14, such that the threads become "terminated state" threads, and the "terminated state" threads are then stored in the thread storage 12. Further, depending on an exemplary embodiment, the thread executor 16 may also transmit information indicating completion of executing threads to the thread selector 14.

Functions of the thread selector 14 and the thread executor 16 described above relate to a case where the multiple threads execution processor 10 includes one processing unit (PU). In a case where the multiple threads execution processor 10 includes a plurality of processing units (PUs), the thread selector 14 may select a number of threads corresponding to the number of processing units (PUs) among "initial state" threads. Further, the thread executor 16 may execute each of a plurality of threads selected by the thread selector 14 in each processing unit at the same time, and independently.

As mentioned above, the multiple threads execution processor 10 according to an exemplary embodiment selects "initial state" threads, and executes the threads in each processing unit (PU), until the threads become a "terminated state". Further, only after completing execution of any one thread, another thread is selected to be executed. By repetition of such selection and execution, threads may be executed until all the threads constituting the multiple threads become a terminated state. As a result, as the multiple threads execution processor 10, more specifically a processing unit (PU), is executing any one thread all the time, thereby enabling efficient use of resources, and a simple configuration of hardware, without any load burden caused by thread switching. Further, even when a control flow is complicated due to a different path of multiple threads, all of the threads may be executed efficiently and rapidly.

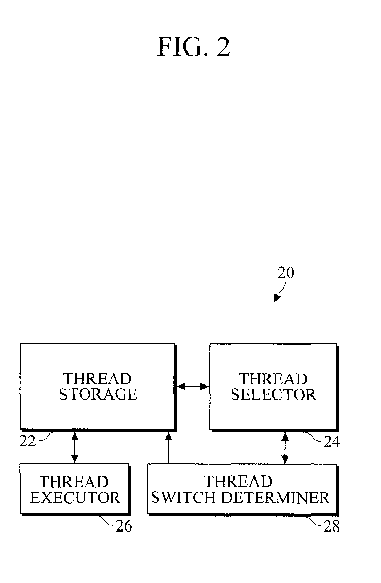

FIG. 2 is a block diagram illustrating a configuration of a multiple threads execution processor according to another exemplary embodiment. Referring to FIG. 2, a multiple threads execution processor 20 includes a thread storage 22, a thread selector 24, a thread executor 26, and a thread switch determiner 28. A configuration of the processor 20 illustrated in FIG. 2 is logically classified according to its function, and each constituent element may be implemented as a separate element in a physical manner, or two or more constituent elements may be integrated to be implemented as one element.

The multiple threads execution processor 20 relates to a processor that executes a plurality of threads for executing an identical program code, like the multiple threads execution processor 10 mentioned above with reference to FIG. 1. The multiple threads execution processor 20 may be a CPU processor, a GPU processor, a GPGPU processor, and the like, but there is no particular limit to its type. The multiple threads execution processor 20 may include one or more processor cores, and each processor core may include one or more processing units (PUs). Multiple threads may all be processed in one PU, or may be simultaneously processed by being distributed in a plurality of PUs. Further, the multiple threads execution processor 20 may be used in a specific computing system, for example, a personal computer, an entertainment system, a media system, a game system, a communication device, a personal digital assistant (PDA), or a specific system that uses one or more processors.

The multiple threads execution processor 20 may include one or more processor cores, and one processor core may include one or a plurality of processing units. One processing unit executes a plurality of threads in such a manner that after a determined code area is executed by a plurality of threads operating in a processor core, thread switching is performed to execute a plurality of threads. This means that, by further extending an instruction limited by a single instruction multiple threads (SIMT) architecture, one thread sequentially executes a number of instructions that would allow efficient operation based on a program structure, regardless of branch divergences and convergences, and then thread switching is performed. In this case, thread switch information may be specified directly by a programmer, or may be generated automatically by a compiler, or software of a similar form.

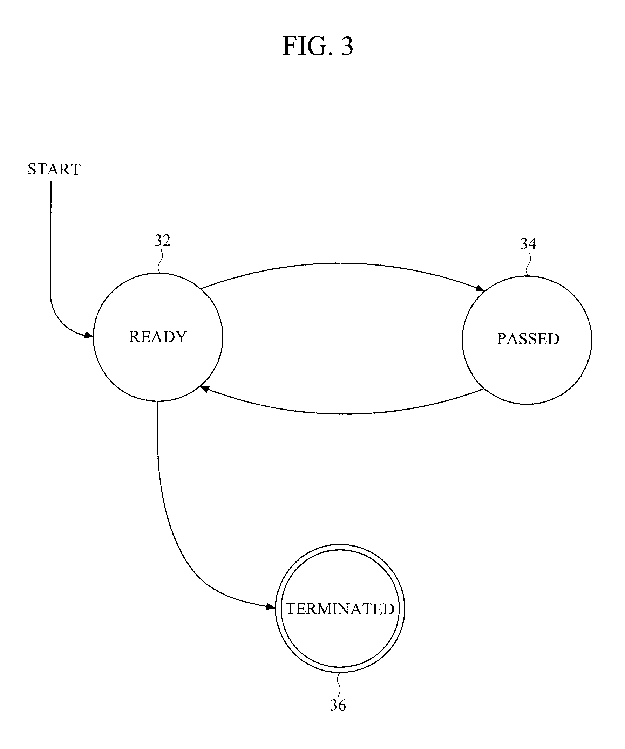

The thread storage 22 is configured to store a plurality of threads executed in the multiple threads execution unit 20. A plurality of threads stored in the thread storage 22 may include one or more multiple threads. Further, paths (a series of instructions) of each multiple thread may be the same as or different from each other. Each of the plurality of threads constituting the multiple threads may be executed independently of each other, or may be executed at the same time. A plurality of threads stored in the thread storage 22 may be "a ready state," "a terminated state," or "a passed state," which will be described in further detail with reference to FIG. 3.

FIG. 3 is a schematic diagram illustrating an example of states that threads may have in a multiple threads execution processor, and state transitions. Referring to FIG. 3, threads may have any one state of a "ready state 32," a "passed state 34," or a "terminated state 36," in which the "terminated state 36" threads refer to threads, of which execution has already been completed in the thread executor 16.

"The ready state 32" threads refer to threads, of which execution is to be started or to be resumed in the thread executor 26, but is not yet complete. In other words, "the ready state 32" threads refer to a state where the threads are in a state capable of being executed. "The ready state 32" threads include threads, of which no instruction has been executed, i.e., initial state threads (see FIG. 1) at a time when the threads are generated, as well as threads of which processing has been temporarily suspended when executing a specific instruction after executing some instructions but are now ready to continue processing. Therefore, "the ready state" threads include "initial state" threads illustrated in FIG. 1, and threads of which some instructions are processed, but which are not in a "terminated state" or a "passed state 34". The "ready state 32" threads may be executed in the thread executor 26, and if a passed instruction is processed during the execution, may be converted into the "passed state 34" and the execution may then be stopped. Further when the execution is completed by processing all instructions, the thread state may be converted into the "terminated state 36".

"The passed state 34" threads refer to threads of which execution is temporarily suspended due to thread switching while executing a specific instruction in the thread executor 26. Specifically, "the passed state 34" refers to a state where thread switching to another thread occurs while executing a thread and processing of instructions issued before the thread switching has not yet been completed. Accordingly, "the passed state 34" threads may not be resumed until the processing of instructions issued before the thread switching is completed. Further, after completing processing of instructions issued before thread switching, the corresponding threads are converted from "the passed state 34" to "the ready state 32" again.

In other words, according to another exemplary embodiment, a state that a thread may be placed into may be dependent on the amount of processing the thread has undergone and is able to undergo. Specifically, a ready state may be understood as a state where either none or some instructions of the thread have been executed, but more importantly the thread is ready/able to continue execution by the processor. A terminated state is a state where all the instructions of a thread have been executed and is therefore completed. Finally, a passed state may be understood to be a state where a thread has executed some instructions but still has other instructions pending. Further, in contrast to the ready state, the thread in the passed state may not be currently able to be processed by the processor. This may be because the instruction needed for the next item in the thread is not currently being executed by the processor.

Further, according to another exemplary embodiment, if a thread is selected to be executed, but the instructions of the program needed by the thread has been processed and passed already by the processor, that thread may be placed in a passed state until the next opportunity that point in the program is reached again, and then the thread may be placed in a ready state so that it can be selected and executed. Once any thread is completed it is then is moved into a terminated state which indicates that it is complete. Simply stated, a thread that is selected midway through a processing cycle must wait until the needed instructions are available again.

Additionally, according to another exemplary embodiment, a thread may be placed into a passed state because the processor is still processing instructions issued before, and any instruction execution request reached in a thread that is not currently being processed would mean that thread cannot process any further. Thus, if the thread is at an instruction that is not currently being processed then the thread must be stopped. It may be switched for another thread in a ready state. The original thread state is then changed from "ready" to "passed." This thread remains in this state until the processor changes and starts processing the instruction required by the thread, at which point the thread can begin being processed again and, therefore, the state of the thread can be changed from "passed" back to "ready".

Further, according to another exemplary embodiment, a thread may enter the "passed state" if the processor switches instructions and therefore leaves the thread incomplete and unable to proceed. In this case, rather than the thread switching instructions as described above, it is the processor that changes. The effect is the same, namely that the state of the thread is set as "passed" until the processor and thread instructions alight allowing for the thread to once again be processed by the processor thereby allowing the thread to be placed in the "ready" state.

The threads may be stored in the thread storage 22 after being generated, which are initially in the ready state 32. The ready state threads become the passed state 34 or the terminated state 36 by being executed in the thread executor 26. In the terminated state 36, all instructions of the ready state threads are processed in the thread executor 26, such that execution of corresponding threads are terminated. By contrast, in the passed state 34, during the course of sequentially processing instructions of the ready state threads, thread switching occurs in a case where a specific instruction (hereinafter, "passed instruction") is issued, such that subsequent instructions are no longer processed (issued) in the thread executor 26. In this case, instructions of another thread selected by the thread selector 24 may be issued to be processed in the thread executor 26. However, processing of the passed instruction is completed, as the instruction is already issued in the thread executor 26 before thread switching. Further, when processing of the passed instruction is complete, the corresponding threads return to the ready state 32 from the passed state 34. The threads that return to the ready state 32 may be selected later by the thread selector 24 again to be executed in the thread executor 36.

Referring to FIG. 2 again, the thread selector 24 is configured to select any one thread to be executed in the thread executor 26 among a plurality of threads stored in the thread storage 22. In this case, the thread selector 24 may select "ready state" threads among threads stored in the thread storage 22. The thread selector 14 does not select "passed state" threads or "terminated state" threads, as execution of the "passed state" threads is suspended by thread switching, and execution of the "terminated state" threads has already been completed in the thread executor 26.

When there is a plurality of "ready state" threads, the thread selector 24 may sequentially select the plurality of threads, in which there is no particular limit to an algorithm for selecting threads to be executed in the thread executor 26. For example, the thread selector 14 may select threads to be executed in the thread executor 16 among the plurality of threads by a round-robin method. However, if there is a combination of threads whose instructions have not yet started to be processed among "ready state" threads and threads whose instructions have been partially processed (that is, threads returning to the ready state 35 from the passed state 34 in FIG. 3), selection may be made with priority put on the former threads, but this is merely an exemplary embodiment.

The thread selector 24 may select threads to be executed in the thread executor 26 by using information that indicates each state of the plurality of threads stored in the thread storage 22, for example, thread state information. The thread state information may be stored by being recorded in a specific storage unit constituting the thread selector 24, or stored by being recorded in a separate storage unit.

The thread state information may be generated and managed by the thread selector 24, whose format has no particular limit. To this end, the thread selector 24 may consistently monitor a state of threads stored in the thread storage 22.

Depending on an exemplary embodiment, the thread selector 24 may receive, from the thread executor 26, information on threads of which execution has been completed, and/or information on threads that become passed state threads after thread switching, and the information may be reflected in the thread state information.

The thread executor 26 is configured to execute threads selected by the thread selector 24. More specifically, the thread executor 26 executes "ready state" threads selected by the thread selector 24. The thread executor 26 executes ready state threads, of which not even one instruction has been processed, in sequential order from an initial instruction. Further, as for ready state threads, of which execution is suspended by thread switching, the thread executor 26 resumes execution of the ready state threads, in sequential order from an instruction following a passed instruction, i.e. an instruction at a point where execution was suspended.

Further, when a passed instruction is processed while a thread is executed, the thread executor 26 suspends execution of the thread. In this case, a thread, of which execution is suspended, is placed into the "passed state 34" thread (see FIG. 3), and as mentioned above, issued instructions of the "passed state" thread are continuously processed in the thread executor 26. "The passed state" thread is again stored in the thread storage 22, and after completing the processing of the issued instructions, the thread may be placed into the "ready state" again. Further, depending on an exemplary embodiment, the thread executor 26 may transmit, to the thread selector 24, information indicating that execution of the thread is suspended (for example, information indicating conversion to the passed state), or information indicating that processing of issued instructions has been completed (for example, information indicating conversion from the passed state to the ready state). Depending on an exemplary embodiment, the thread switch determiner 28 may transmit information indicating that execution of the thread has been suspended (i.e. information indicating conversion to the passed state).

While executing a thread, if the thread executor 26 executes all instructions without executing a passed instruction, the thread is moved into the "terminated state 36" (see FIG. 3). The "terminated state" thread is again stored in the thread storage 22. Depending on an exemplary embodiment, the thread executor 26 may transmit, to the thread selector 24, information indicating that execution of the threads has been completed.

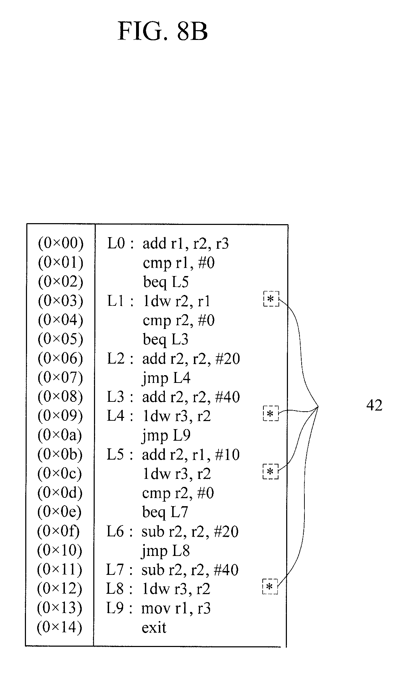

The thread switch determiner 28 may be configured to determine whether a thread instruction, which is currently queued to be processed, is a passed instruction. For example, the thread switch determiner 28 may fetch and decode, one by one, instructions of threads selected by the thread selector 24, so that the instructions are executed in the thread executor 26, while determining whether the instructions are passed instructions. If determined as not being a passed instruction, the instruction is processed in the thread executor 26, and the thread switch determiner 28 continues to determine whether a subsequent instruction is a passed instruction. In contrast, if the instruction is determined as being a passed instruction, the instruction is processed in the thread executor 26, but thereafter, the thread selector 24 selects another thread to be executed in the thread executor 26. Further, the thread switch determiner 28 may transmit determination results (for example, information indicating whether a fetched and decoded instruction is a passed instruction) to the thread selector 24. According to an exemplary embodiment, there may be various methods for determining, using the thread switch determiner 28, whether an instruction currently queued to be processed is a passed instruction. For example, the thread switch determiner 28 may determine by using thread switching information, which explicitly indicates that the instruction is a passed instruction (see sections marked by "*" of drawing reference numeral 42 in FIG. 8b). To this end, when writing a program code (e.g. encoding of Instruction Set Architecture (ISA)), encoding may be performed to include the thread switching information. The thread switch information may be included arbitrarily by a programmer, or may be automatically included according to a predetermined algorithm while encoding.

Alternatively, the thread switch determiner 28 may determine whether the instruction is a passed instruction, even though information on a passed instruction is not explicitly marked. For example, the thread switch determiner 28 may already have information on a passed instruction, and may then determine whether a decoded and fetched instruction is a passed information by using the information.

In another example, the thread switch determiner 28 may determine whether a decoded and fetched instruction is a passed instruction based on latency of instructions, in which the thread switch determiner 28 may determine only instructions, whose latency is above a predetermined value, as a passed instruction. As mentioned above, if instructions, which have relatively big latency, are determined as a passed instruction, thread switching occurs after the instructions are processed, such that latency hiding is possible. A method of using latency of instructions is not limited thereto, but may be commonly applied to all examples mentioned above, including an example of using explicit information on a passed instruction.

As mentioned above, the multiple threads execution processor 20 executes threads selected from among the ready state threads. In this case, if the selected threads are threads selected for the first time, processing is performed from an initial instruction. In contrast, if the selected threads are threads restored to the ready state after being in the passed state, processing is performed from a suspended point (an instruction following a passed instruction). Further, if an instruction processed while a thread is executed is a passed instruction, the multiple threads execution processor 20 performs thread switching, and selects another thread to start or resume execution of the thread. In this case, the thread being executed before thread switching becomes a passed state thread, and returns to the ready state after completing processing of a passed instruction. Subsequently, when a passed instruction is no longer processed while a thread is executed, execution of the thread is completed, and becomes a terminated state thread. By contrast, if a passed instruction is processed before completing execution of the thread, the thread switching is performed again, and such process continues until stored instructions all become the terminated state.

Each function of the thread selector 24, the thread executor 26, and the thread switch determiner 28 relates to a case where the multiple threads execution processor 20 includes one processing unit (PU). In a case where the multiple threads execution processor 20 includes a plurality of processing units (PUs), the thread selector 24 may select a number of threads corresponding to a number of processing units among "ready state" threads. Further, the thread executor 26 may execute each of a plurality of threads selected by the thread selector 24 in each processing unit (PU), at the same time and independently. In addition, whether to perform thread switching while the thread executor 26 executes selected threads may also be determined in each processing unit (PU) individually.

As described above, the multiple threads execution processor 20 selects and executes "ready state" threads in each processing unit (PU). By repetition of such selection and execution, threads may be executed until all the threads constituting multiple threads reach a terminated state. As a result, the multiple threads execution processor 20, more specifically a processing unit, executes any one thread all the time, thereby enabling efficient use of resources, without any load burden caused by thread switching, as well as a simple configuration of hardware. Further, even in a case where a control flow is complicated due to different paths of multiple threads, all of the threads may be executed efficiently and rapidly.

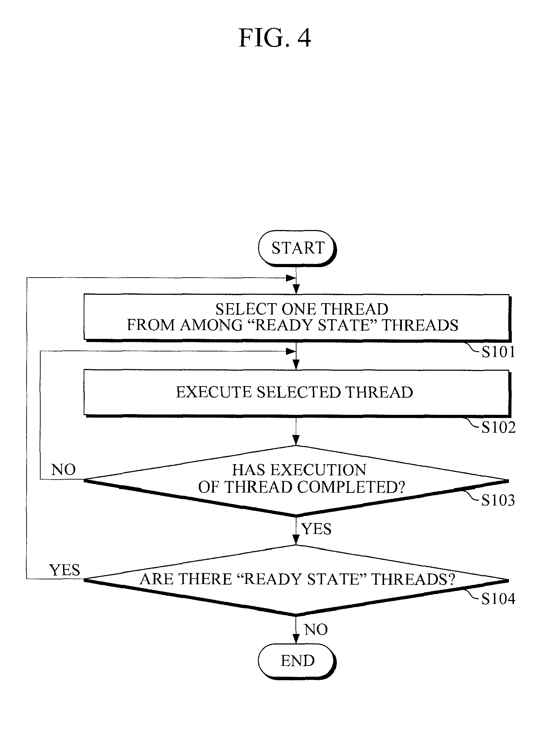

FIG. 4 is a flowchart illustrating an operating method (example method of operating a multiple threads execution processor) of a multiple threads execution processor according to an exemplary embodiment. The flowchart illustrated in FIG. 4 may be a method of operating the multiple threads execution processor 10 illustrated in FIG. 1. Therefore, the operating method will be briefly described hereinafter, in order to avoid overlap. Further, matters not described in detail herein may correspond to those described above with reference to FIG. 1.

Referring to FIGS. 1 and 4, the multiple threads execution processor 10 selects one thread from among "ready state" threads (S101). As described above, the thread storage 12 of the multiple threads execution processor 10 may store ready state threads and/or terminated state threads, and the thread selector 14 may select any one thread among the ready state threads. Further, the thread executor 16 of the multiple threads execution processor 10 executes the selected thread (S102). Subsequently, it is determined whether or not execution of a thread, which is being executed in operation S102, has been completed (S103). When determined that the execution has not been completed, the selected thread is continuously executed. When a result of the determination in S103 shows that the execution of a thread, which is being executed in operation S102, has been completed, it is determined whether or not there are ready state threads in the thread storage 12 (S104). When a result of the determination in operation S104 shows that there are more initial state threads in the thread storage 12, operations S101 to S104 mentioned above are repeated. By contrast, when a result of the determination in S104 shows that there are no initial state threads but only terminated state threads in the thread storage 12, execution of the corresponding multiple threads is terminated.

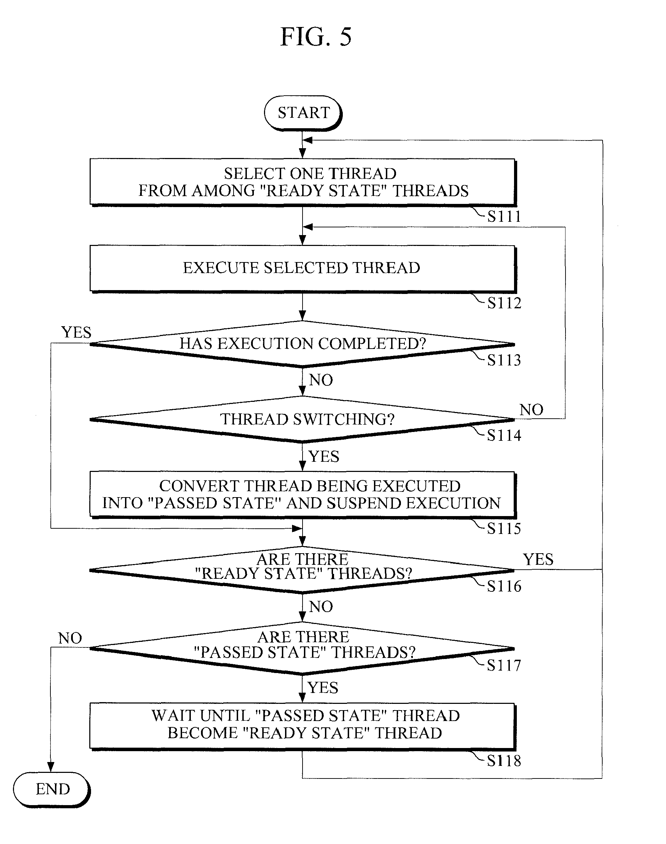

FIG. 5 is a flowchart illustrating an operating method of a multiple threads execution processor according to another exemplary embodiment. The flowchart illustrated in FIG. 5 may be an operating method of the multiple threads execution processor 20 illustrated in FIG. 2. Therefore, the operating method will be briefly described hereinafter, in order to avoid overlap. Further, matters not described in detail herein may correspond to those described above with reference to FIG. 2.

Referring to FIGS. 2 and 5, the multiple threads execution processor 20 selects one thread from among ready state threads (S111). As described above, the thread storage 22 of the multiple threads execution processor 20 may store ready state threads, passed state threads, and/or terminated state threads, and the thread selector 24 may select any one of the ready state threads. Further, the thread executor 26 of the multiple threads execution processor 20 executes the selected thread (S 112). Subsequently, it is determined whether or not execution of a thread, which is being executed in operation S112, is complete (S 113). When it is determined that execution of the selected thread is not complete, the thread switch determiner 28 determines whether to perform thread switching (S 114). , If thread switching is determined, then the thread being executed is converted into a "passed state" and further execution is suspended (S 115). This may be determined by whether an instruction currently being processed is a passed instruction. When determined that execution of the selected thread is complete, the thread switch determiner 28 determines whether or not there are more ready state threads in the thread storage 22 (S116). When thread switching is not performed based on a result of the determination in operation S 114, the thread executor 26 continuously executes the selected thread, whereas when thread switching is performed based on a result of the determination in operation S 114, the thread being executed is converted into a passed state, and execution of the thread is suspended in operation S 115.

Thereafter, when determined in operation S113 that execution of thread is complete, or when thread switching is performed in operations S 114 and S 115, it is determined whether or not there are more ready state threads in the thread storage 22 (S116). When there are more ready state threads in the thread storage 22, operations are repeated, starting with operation S111. By contrast, when there are no more ready state threads in the thread storage 22, it is determined whether or not there are passed state threads in the thread storage 22 (S 117). When determined in operation S 117 that there are no passed state threads but only terminated state threads in the thread storage 22, execution of the multiple threads is terminated, while when determined that there are passed state threads, operations are repeated starting with operation S111, after waiting until the passed state threads are converted into a ready state.

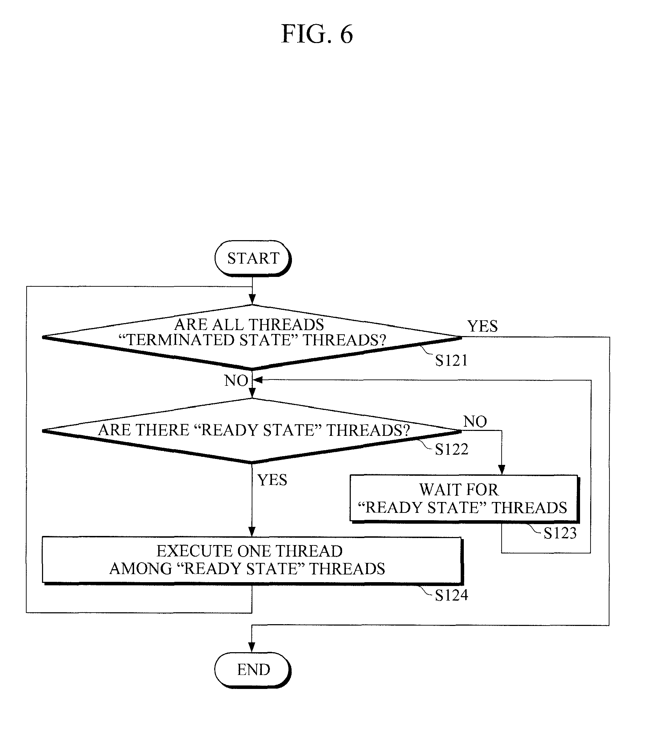

FIG. 6 is a flowchart illustrating an operating method of a multiple threads execution processor according to another exemplary embodiment. The flowchart illustrated in FIG. 6 may be a flowchart illustrating that the multiple threads execution processors 10, 20 illustrated in FIG. 1 or FIG. 2 resume execution of one thread. As described above, the multiple threads execution processors 10, 20 store and manage multiple threads to be executed in each processing unit (PU), and select one thread to be executed within a given time among the multiple threads, to execute the selected thread in a processing unit (PU).

Further, the flowchart illustrated in FIG. 6 may be substantially identical to the operating method described above with reference to FIG. 4 or FIG. 5. The difference between the flowchart in FIG. 6 and the flowchart in FIG. 4 or FIG. 5, results from a different viewpoint, with the substance being similar to each other. Accordingly, matters not described in detail herein may correspond to those described above with reference to FIG. 4 or FIG. 5.

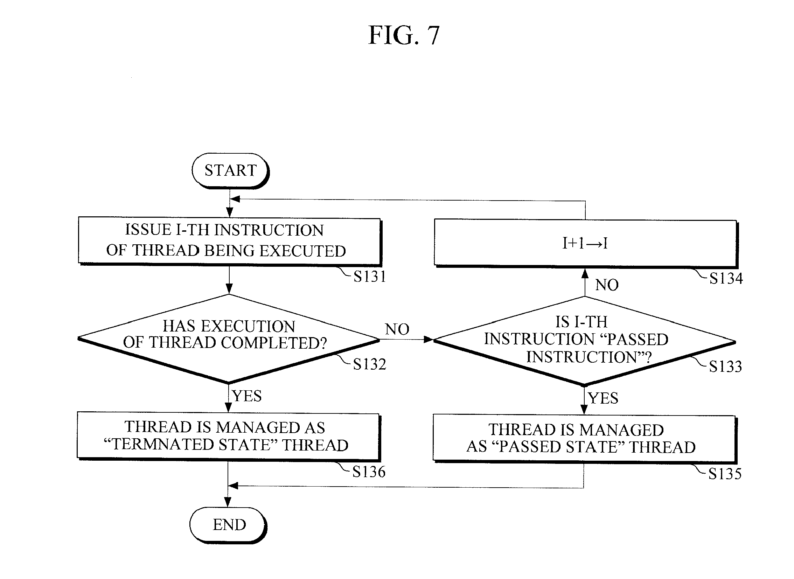

Referring to FIG. 6, a multiple threads execution processor determines whether a plurality of threads constituting multiple threads are all in a terminated state (S121). When determined that all the threads are terminated state threads (execution of all the threads is already complete normally), the multiple threads execution processor ends execution of the multiple threads. By contrast, when at least one thread is not in a terminated state, it is determined whether or not there are ready state threads (including the initial state threads in FIG. 1; hereinafter the same shall apply in the exemplary embodiments) (S122). When determined that there are no ready state threads, operation S122 is repeated after waiting for ready state threads (S123). By contrast, when there is at least one ready state thread in operation S122, the multiple threads execution processor selects at least one thread among the ready state threads, and performs thread switching to execute the thread (S124). A specific example of executing the selected thread is illustrated in FIG. 7, which will be described below. Further, when execution of the selected thread is suspended, the multiple thread execution processor repeats operations, starting with operation S121.

FIG. 7 is a flowchart illustrating an operating method of a multiple threads execution processor according to another exemplary embodiment. The flowchart illustrated in FIG. 7 may be an operating method of the multiple threads execution processors 10, 20 illustrated in FIG. 1 or FIG. 2, but is not limited thereto. Further, the flowchart illustrated in FIG. 7 may be similar to the operating method described above with reference to FIG. 4 or FIG. 5. However, the flowchart illustrated in FIG. 7 may be different from the flowchart in FIG. 4 or FIG. 5 in that the flowchart illustrated in FIG. 7 may be a flowchart described from a viewpoint of executing and managing a specific thread in a multiple threads execution processor. Accordingly, matters not described in detail herein may correspond to those described above with reference to FIG. 4 or FIG. 5.

Referring to FIG. 7, a multiple threads execution processor performs processing by issuing an ith instruction of a thread being executed (S131). The thread being executed may be comprised of n (n is an integer of two or above) number of instructions, in which i is any integer from 1 to n. Further, upon completion of processing of ith instruction, it is determined whether or not execution of the thread has been completed (S132). When determined that execution of the thread has not been completed, it is determined whether or not the processed ith instruction is a passed instruction (S133). When determined that the ith instruction is not a passed instruction, value of i is increased (S134) by 1 to repeat operations, starting with operation S131. By contrast, when determined that the ith instruction is a passed instruction, execution of the thread is suspended, and the thread is managed as a passed state thread (S135). When determined in operation S132 that execution of the thread has been completed, the thread, of which execution is complete, is managed as a terminated state thread (S 136).

Thereafter, an operating method of a multiple threads execution processor according to an exemplary embodiment will be described by using an example program code, and by comparing it with an operating method according to a SIMT architecture. Hereinafter, although described using a specific program code, it is obvious to a person of ordinary skill in the art that this is merely exemplary. The above-mentioned exemplary embodiments may also be applied to a case of using a different program code other than the above example program code.

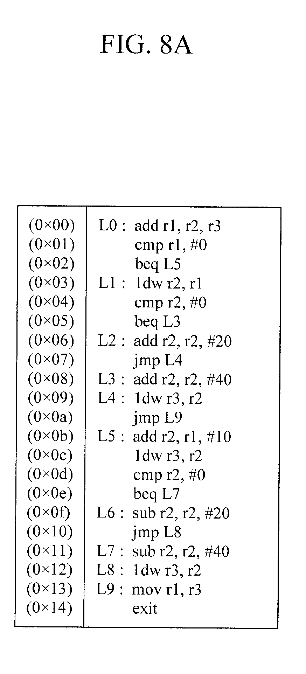

FIGS. 8A and 8B each are views illustrating examples of an example program code, in which FIG. 8A is a case where thread switch information is not explicitly marked in a program code, while FIG. 8B is a case where thread switch information is explicitly marked in a specific instruction of a program code. Such specific instruction may be considered a passed instruction. In the left column of FIGS. 8A and 8B is a program counter (PC), and in the right column thereof are instructions in each PC. Further, as illustrated in the right column of FIGS. 8A and 8B, the program code may be considered a group of one or more instructions (L0 to L9) depending on a flow control. In FIG. 8B, load word (LDW) instructions are all marked as passed instructions, but this is merely exemplary. A mark for indicating such passed instruction (thread switching information) may be added manually by a programmer, or automatically by specific software or hardware, as described above.

Hereinafter, the operating method of the multiple threads execution processor in FIG. 4 will be described using the example program code in FIG. 8A, and the operating method of the multiple threads execution processor in FIG. 5 will be described using the example program code in FIG. 8B. Although thread switch information is not explicitly marked in the example program code in FIG. 8A, processing may also be performed according to the operating method of the multiple threads execution processor in FIG. 5 in a case where thread switching occurs in a specific instruction (a passed instruction) according to an internal algorithm and the like, as described above.

FIG. 8C is a view illustrating a control flow graph (CFG) of the example program code illustrated in FIGS. 8A and 8B. For convenient illustration, the thread switch information illustrated in FIG. 8B is not illustrated in FIG. 8C. Referring to 8C, as the example program code is comprised of two branches, it can be understood that the example program code may be processed through one among four paths by comparing the two branches. The four paths are as follows:
- Path P0: L0 → L1 → L2 → L4 → L9
- Path P1: L0 → L1 → L3 → L4 → L9
- Path P2: L0 → L5 L6 → L8 → L9
- Path P3: L0 → L5 → L7 → L8 → L9

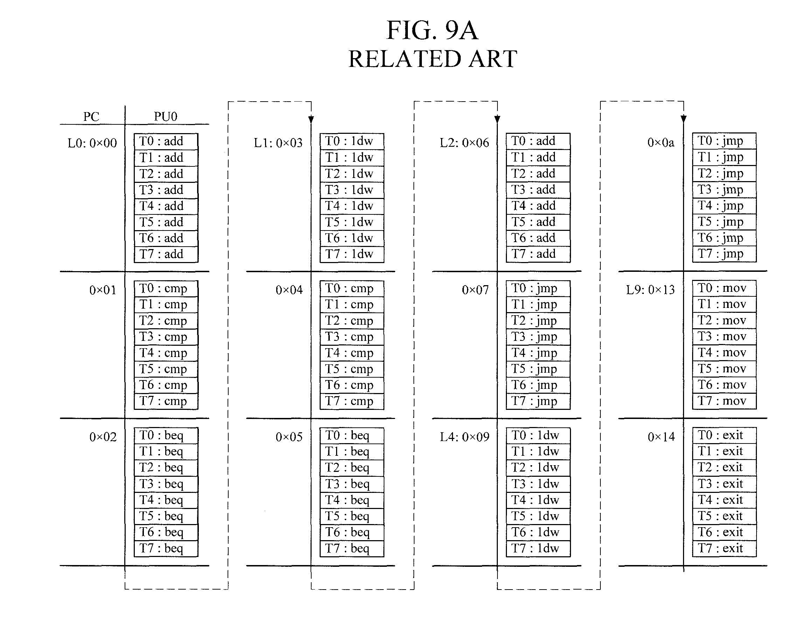

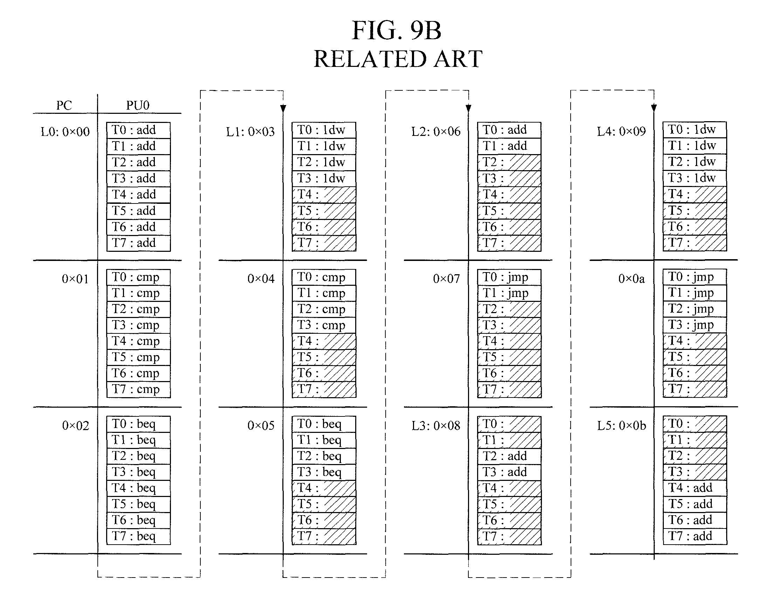

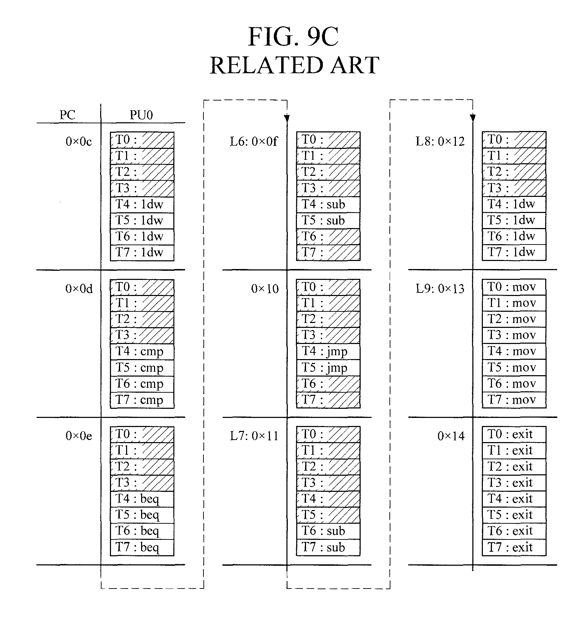

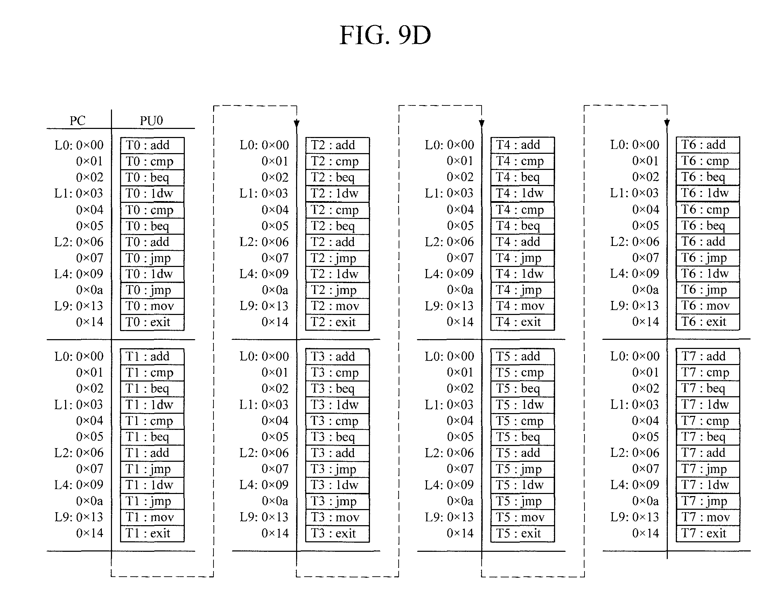

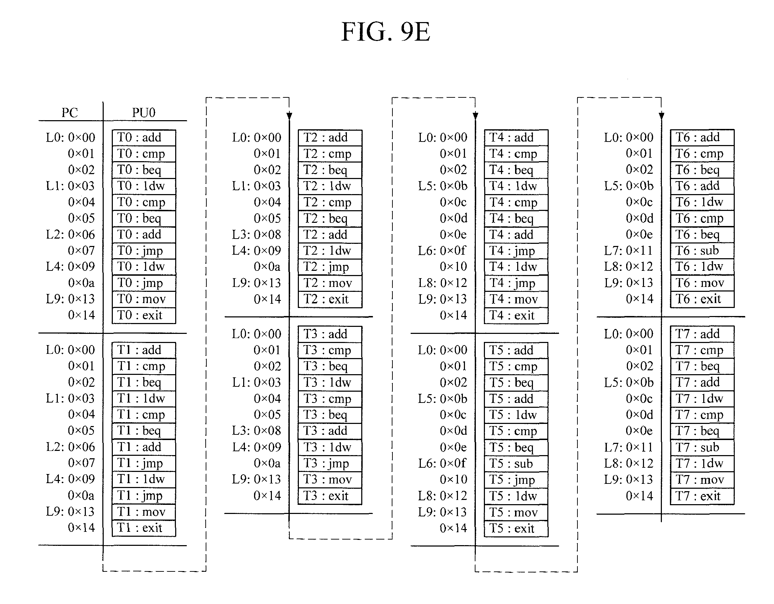

FIGS. 9A, 9B, 9C, 9D and 9E are views illustrating multiple threads execution processors, each having one processing unit (PU), executing the example program code in FIG. 8a, in which the illustrations in FIGS. 9B and 9C are divided into two views for convenience. FIGS. 9A to 9E are views in a case where one processing unit (PU) executes 8 threads, in which FIGS. 9A, 9B and 9C illustrate execution of a multiple threads execution processor according to a SIMT architecture, and FIGS. 9D and 9E illustrate execution of a multiple threads execution processor according to an exemplary embodiment illustrated in FIG. 1. Further, FIGS. 9A and 9D are views in a case where 8 threads (T0 to T7) executed in a processing unit (PU) all follow an identical path, i.e. path P0 only. FIGS. 9B, 9C and 9E are views in a case where 8 threads (T0 to T7) follow four different paths (P0 to P3), in which threads T0 and T1 follow path P0, threads T2 and T3 follow P1, threads T4 and T5 follow path P2, and threads T6 and T7 follow path P3.

As can be seen in FIGS. 9A, 9B, and 9C, in a related art SIMT architecture, instructions read in the same program counter (PC) are processed for all threads at the same time. For example, if a program counter (PC) has an 0x00 address, an "add" instruction read in a memory is processed by all threads (T0 to T7), to proceed to a next program counter. In FIGS. 9A, 9B and 9C, a point where a program counter (PC) is changed is shown in thick lines. In this execution method, thread switching may implicitly occur 8 times maximum for executing one instruction.

Referring to FIG. 9A, in a case where all threads (T0 to T7) follow an identical path, instructions obtained in each program counter (PC) may be processed for all threads. As a result, processing resources may be used 100%, as there are no threads, of which instructions are not processed in each program counter (PC). Therefore, in a case where all threads follow an identical path, a multiple threads execution processor according to a SIMT architecture is highly effective in resource use.

By contrast, as illustrated in FIGS. 9B and 9C, in a case where threads (T0 to T7) follow different paths, instructions of some threads may not be processed in a specific program counter (PC), because instructions obtained in the same program counter (PC) are to be processed for all threads in the SIMT architecture, but in some cases, these instructions are the ones that should not be executed in a control path of some threads. For example, LDW instruction of 0x03 address should be processed for threads T0, T1, T2 and T3, but should not be processed for the rest of threads T4, T5, T6 and T7 (areas shown in diagonal lines in FIGS. 9B and 9C). As a result, instructions in some program counters (PC) are not processed for some threads, such that processing resources are used less than 100%. Therefore, in a multiple threads execution processor according to a related art SIMT architecture, resources may be used less efficiently when threads follow different paths.

By contrast, as can be seen in FIGS. 9D and 9E, in an operating method of a multiple threads execution processor according to an exemplary embodiment, after completing thread execution of any one thread selected, a subsequent thread is executed, regardless of whether all threads (T0 to T7) follow an identical path as in FIG. 9D, or all threads (T0 to T7) follow different paths as in FIG. 9E. In FIGS. 9D and 9E, a point where thread switching occurs is shown in thick lines. Thread switching may be performed according to an algorithm in which all threads may be equally selected, such as a round-robin algorithm, but is not particularly limited. Further, execution of all threads may be completed after performing thread switching 8 times, which is the number of threads to be executed.

Upon comparison of the operating method according to the exemplary embodiment with an operating method according to a SIMT architecture, in the SIMT architecture, one processing unit (PU) executes 8 threads at the same time, whereas in the exemplary embodiment, a processing unit (PU) sequentially executes 8 threads. If all threads (T0 to T7) follow an identical path, there is no difference between the method and the exemplary embodiment in that processing resources are used efficiently. However, if the threads (T0 to T7) follow different paths, the method results in a less efficient use of processing resources, while in the exemplary embodiment, processing resources are used efficiently as in the case where all threads (T0 to T7) follow an identical path.

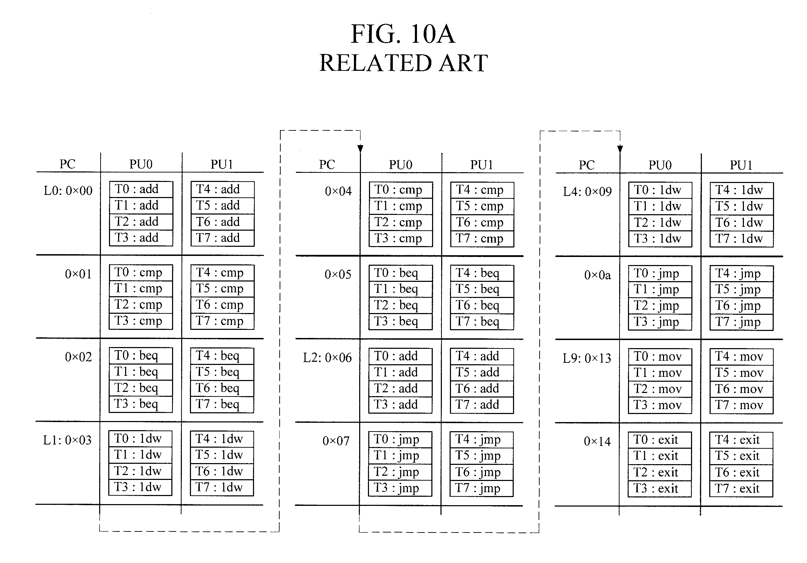

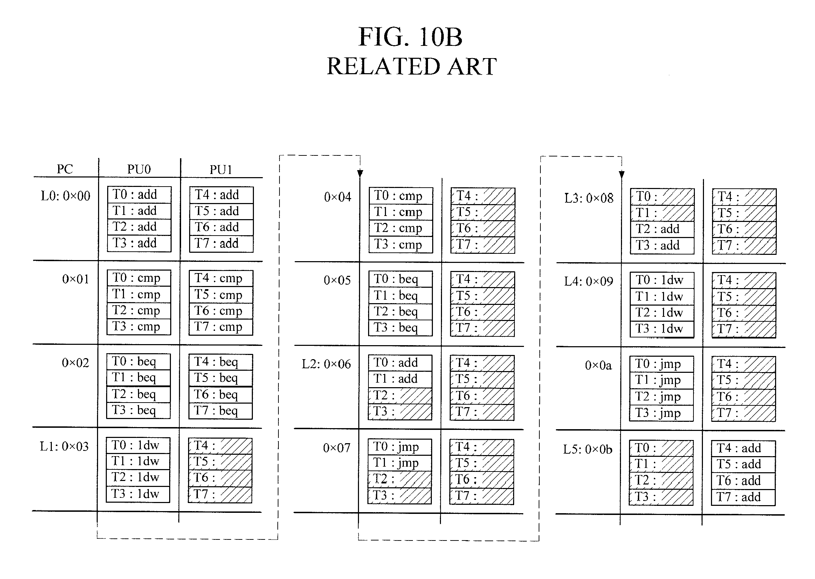

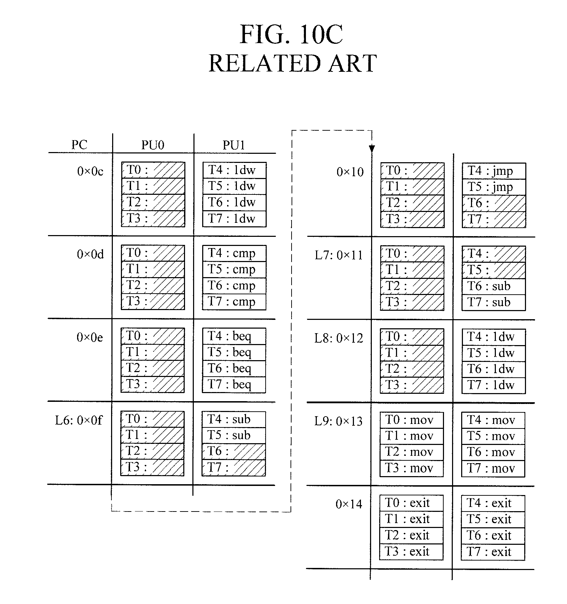

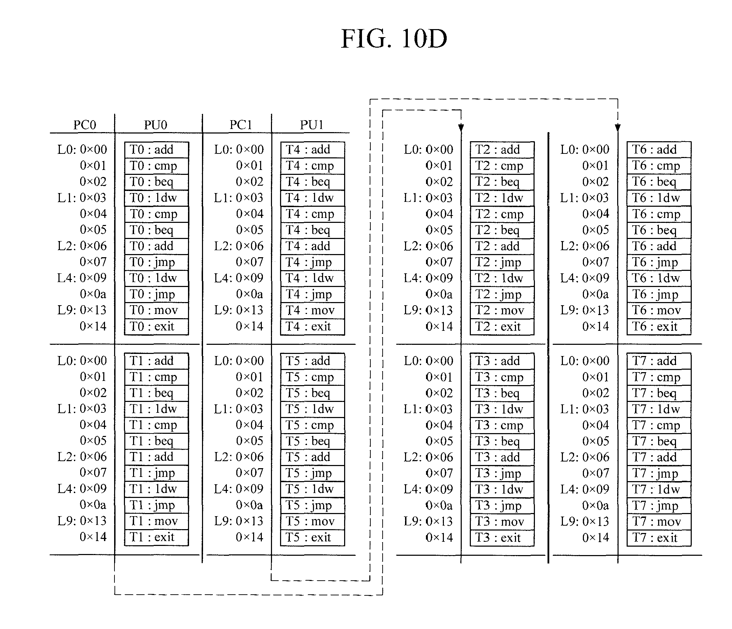

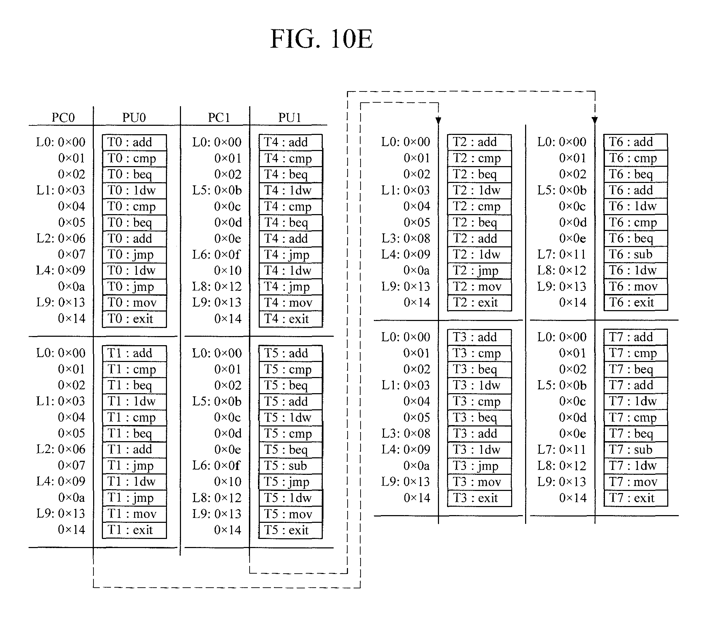

FIGS. 10A, 10B, 10C, 10D and 10E are views illustrating multiple threads execution processors, each having two processing units (PU0, PU1), executing the example program code in FIG. 8a, in which the illustrations in FIGS. 10B and 10C are divided into two views for convenience. FIGS. 10A to 10E are views in a case where each of the two processing units (PU0, PU1) executes 4 threads, in which processing unit PU0 executes threads T0, T1, T2 and T3, and processing unit PU1 executes T4, T5, T6 and T7. Further, FIGS. 10A, 10B and 10C illustrate execution of a multiple threads execution processor according to a related art SIMT architecture, and FIGS. 10D and 10E illustrate execution of a multiple threads execution processor according to an exemplary embodiment illustrated in FIG. 1. In addition, FIGS. 10A and 10D are views in a case where 8 threads (T0 to T7) executed in processing units (PU0, PU1) all follow an identical path, i.e. path P0 only. FIGS. 10B, 10C and 10E are views in a case where 8 threads (T0 to T7) follow four different paths (P0 to P3), in which threads T0 and T1 follow path P0, threads T2 and T3 follow P1, threads T4 and T5 follow P2, and threads T6 and T7 follow path P3.

As can be seen in FIGS. 10A, 10B, and 10C, even when executing threads with two processing units (PU0, PU1) in a related art SIMT architecture, instructions in the same program counter (PC) are processed for all threads. That is, in the SIMT architecture, two processing units (PU0, PU1) use an identical program counter (PC). In FIGS. 10A, 10B, and 10C, a point where a program counter (PC) is changed is shown in thick lines. According to the execution method, thread switching may implicitly occur to a maximum of four times in each processing unit (PU0, PU1) to execute one instruction. As in the case of executing threads with one processing unit (see FIGS. 9A, 9B, and 9C), even when executing threads with two processing units (PU0, PU1), if all threads (T0 to T7) follow an identical path, processing resources are used 100%, while if the threads (T0 to T7) follow different paths, processing resources are used less efficiently (in FIGS. 10B and 10C, threads, of which instructions issued are not processed in the corresponding program counter, are shown in diagonal lines).

As can be seen in FIGS. 10D and 10E, each processing unit (PU0, PU1) uses a separate program counter (PC0, PC1), which is different from the SIMT architecture. The program counter (PC0, PC1) specifies any one execution path among a plurality of execution paths executing a program code. Further, in the operating method of the multiple threads execution processor according to an exemplary embodiment, upon completing execution of any one thread selected, a subsequent thread is executed, regardless of whether all threads (T0 to T7) follow an identical path as in FIG. 10D, or the threads (T0 to T7) follow different paths as in FIG. 10E. For example, processing unit P0 executes threads in sequential order of T0, T1, T2, and T3, and processing unit PU1 executes threads in sequential order of T4, T5, T6, and T7. A point where thread switching occurs is also shown in thick lines in FIGS. 10D and 10E. After performing thread switching four times, which is the number of threads to be executed in each processing unit (PU0, PU1), execution of all threads may be completed.

Upon comparison of the operating method according to the exemplary embodiment with an operating method according to a related art SIMT architecture, processing units (PU0, PU1) each execute four threads at the same time in the SIMT architecture, whereas in the exemplary embodiment, processing units (PU0, PU1) each sequentially execute four threads. If all threads (T0 to T7) follow an identical path, there is no difference between the related art method and the exemplary embodiment in that processing resources are used efficiently. However, if the threads (T0 to T7) follow different paths, the related art method results in a less efficient use of processing resources, while in the exemplary embodiment, processing resources may be used efficiently as in the case where all threads (T0 to T7) follow an identical path.

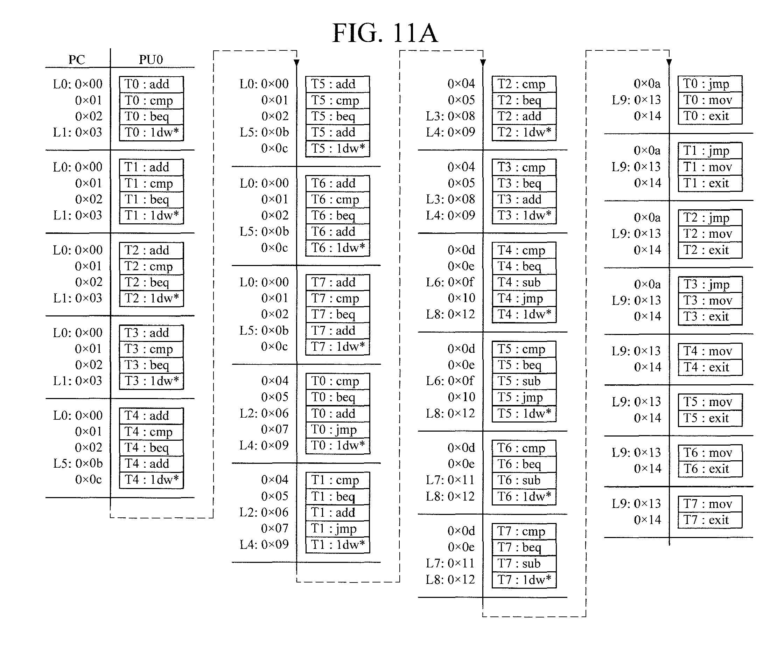

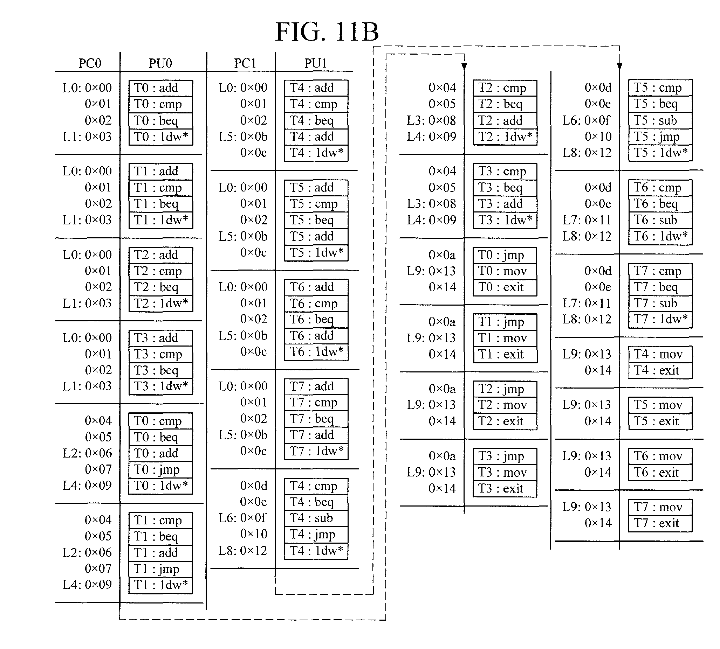

FIGS. 11A and 11B are views illustrating multiple threads execution processors, each having one or two processing units (PU), executing the example program code in FIG. 8b according to an exemplary embodiment. As mentioned above, the example program code is a program code in which thread switch information is marked in a specific instruction (passed instruction). FIG. 11A is a view illustrating a case where one processing unit (PU) executes 8 threads, and FIG. 11B is a view illustrating a case where two processing units (PU0, PU1) each execute four threads, in which each processing unit (PU0, PU1) uses a separate program counter (PC0, PC1). Further, in FIGS. 11A and 11B, 8 threads (T0 to T7) follow four different paths (P0 to P3), in which threads T0 and T1 follow path P0, threads T2 and T3 follow P1, threads T4 and T5 follow P2, and threads T6 and T7 follow path P3. Although not illustrated, it is obvious to a person of ordinary skill in the art that FIGS. 11A and 11B may also be applied to a case where 8 threads (T0 to T7) follow an identical path, e.g. path P0.

Referring to FIGS. 11A and 11B, in an operating method of a multiple threads execution processor according to an exemplary embodiment, when an instruction issued while executing any one thread selected is a passed instruction, a processing unit performs thread switching, and selects another thread to execute the thread. For example, in FIGS. 11A and 11B, processing units (PU0, PU1) perform thread switching every time load word (LDW) is issued and processed. In this case, a previous thread becomes a passed state thread, and upon completing processing of the passed instruction issued, the thread becomes a ready state thread again. A point where thread switching occurs is shown in thick lines in FIGS. 11A and 11B. In this manner, threads are sequentially executed by performing thread switching for a passed instruction until completion of processing of all threads, regardless of whether all threads (T0 to T7) follow an identical path, or the threads (T0 to T7) follow different paths as in FIGS. 11A and 11B. Thread switching may be performed according to an algorithm in which all threads may be equally selected, such as a round-robin algorithm, but is not particularly limited.

In the operating method according to an exemplary embodiment, efficient use of processing resources is enabled regardless of whether or not 8 threads follow an identical path. In addition, if latency is a long instruction, such as a load instruction, a long latency may be hidden by thread switching. For example, upon completing processing of load word (LDW) instruction issued at the address of 0x03 of thread T0 at a point where execution of thread T0 is resumed later, processing units (PU, PU0, PU1) may continue to execute without ceasing, and as a result, latency hiding of a long-latency instruction may be enabled without reducing resource efficiency of a program having a complicated control flow.

According to an exemplary embodiment, thread switching is performed after completing execution of a selected thread, or only when a specific instruction is processed, and accordingly, overhead caused by thread switching may be reduced.

Further, processing resources may be used efficiently, regardless of whether or not a plurality of threads follows an identical path, such that applications having a complicated control flow may be operated efficiently.

In addition, after a relatively long latency instruction is issued, thread switching is performed to execute another thread, thereby enabling efficient use of resources and latency hiding.

Moreover, a point of thread switching may be statically fixed, such that hardware logic may not be needed for determining thread switching. As a result, hardware structure may be simplified, and a chip size may be reduced, with lower power consumption.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims. Further, the above-described examples are for illustrative explanation, and thus, the present invention is not limited thereto.

While exemplary embodiments have been described with respect to a limited number of embodiments, those skilled in the art, having the benefit of this disclosure, will appreciate that other embodiments can be devised which do not depart from the scope as disclosed herein. Accordingly, the scope should be limited only by the attached claims.

## Claims

1. A multiple threads execution processor comprising:
a thread selector configured to select a first thread from among a plurality of threads for executing a program code; and
a thread executor configured to execute the first thread selected by the thread selector, and execute a second thread selected by the thread selector from among the plurality of threads after completing execution of the first thread.

2. The multiple threads execution processor of claim 1, wherein each thread of the plurality of threads is configured to follow any one execution path from among a plurality of execution paths for executing the program code, and/or
wherein the plurality of execution paths is determined by program counters corresponding to each of the plurality of execution paths.

3. The multiple threads execution processor of claim 1 further comprising a thread switch determiner configured to determine whether an instruction issued for executing the first thread is a passed instruction,
wherein the thread executor is further configured to, in response to a determination made by the thread switch determiner that an instruction issued while executing the first thread is a passed instruction, perform thread switching to a second thread selected by the thread selector from among the plurality of threads stored in the thread storage, to execute the second thread.

4. The multiple threads execution processor of claim 1 or 3, further comprising a thread storage configured to store the plurality of threads.

5. The multiple threads execution processor of claim 3, wherein the thread switch determiner is further configured to determine whether the issued instruction is a passed instruction based on thread switch information explicitly marked in the program code.

6. The multiple threads execution processor of claim 5, wherein the thread switch information is included while encoding the program code, and/or
wherein the thread switch information is included by a programmer while encoding the program code, or automatically included while encoding according to a specific algorithm.

7. The multiple threads execution processor of claim 4,
wherein each thread of the plurality of threads stored in the thread storage is in one of a ready state, a passed state, and a terminated state, and wherein the thread selector is further configured to select one thread in the ready state from among the plurality of threads.

8. The multiple threads execution processor of claim 7,
wherein the first thread becomes a passed state thread in response to the thread executor performing thread switching from the first thread to the second thread and the first thread is restored to a ready state thread in response to the thread executor completing processing of a passed instruction issued before the thread switching, or
wherein the thread selector is further configured to select ready state threads from among the plurality of threads by using thread state information indicating the state of each of the plurality of threads stored in the thread storage.

9. The multiple threads execution processor of claim 7, wherein the thread storage is further configured to select threads in the initial state from among the plurality of threads by a round-robin method, or
wherein the thread selector is further configured to select threads in the initial state from among the plurality of threads by using thread state information indicating a state of each of the plurality of threads stored in the thread storage.

10. The multiple threads execution processor of claim 1, wherein the thread executor is further configured to execute instructions of a thread sequentially in response to a thread being in a ready state;
wherein the thread selector is further configured to halt execution of the instructions of the thread when the thread is in a passed state and waiting until the thread state changes back to the ready state before continuing execution, and
wherein the thread executor and thread selector are further configured to complete execution of the thread by completing the execution of all instructions in the thread using the thread executor and placing the thread into a terminated state using the thread selector.

11. The multiple threads processor of claim 10, wherein the thread selector is further configured to selected as second thread in response to the thread being in a passed state and the thread executor is further configured to execute second instructions of the second thread, or
wherein execution is halted in response to the thread being put into the passed state when a current instruction to be executed exceeds a processing time threshold.

12. A method of operating a multiple threads execution processor to execute a plurality of threads for executing a program code, the method comprising:
executing a first thread among the plurality of threads; and
performing thread switching to execute another thread among the plurality of threads,
wherein the plurality of threads are sequentially executed until execution of the plurality of threads is complete.

13. The operating method of claim 12, further comprising determining, using the multiple threads execution processor, whether an instruction issued for execution is a passed instruction when executing the first thread from among the plurality of threads,
wherein the execution of the first thread is performed by using the multiple threads execution processor in response to a determination that the issued instruction is not a passed instruction, and wherein the method further comprises performing thread switching to execute a second thread from among the plurality of threads in response to a determination that the issued instruction is a passed instruction.

14. The operating method of claim 13, wherein the plurality of threads are sequentially executed through thread switching until execution of the plurality of threads is complete.

15. The operating method of claim 13, wherein thread switch information for determining whether the issued instruction is a passed instruction is explicitly marked in the program code.
